Europäisches Patentamt

European Patent Office

Office européen des brevets

(11) Publication number: **0 429 132 A1**

# EUROPEAN PATENT APPLICATION

(21) Application number: 90203024.6

(51) Int. Cl.⁵: **C10G 49/02, B01J 37/34**

(22) Date of filing: 14.11.90

(30) Priority: 23.11.89 FR 8915411

(43) Date of publication of application:
29.05.91 Bulletin 91/22

(84) Designated Contracting States:
AT BE CH DE DK ES FR GB IT LI NL SE

(71) Applicant: SHELL INTERNATIONALE
RESEARCH MAATSCHAPPIJ B.V.
Carel van Bylandtlaan 30
NL-2596 HR Den Haag(NL)

(72) Inventor: Dufour, Jacques Julien Jean, c/o
Shell Recherche
S.A., Centre de Recherche, Route de Caen
F-76530 Grand Couronne(FR)

(74) Representative: Aalbers, Onno et al
P.O. Box 302
NL-2501 CH The Hague(NL)

(54) Hydroconversion process.

(57) Process for converting hydrocarbonaceous materials at elevated temperature and pressure in the presence of hydrogen using a metal(s)- and/or metal-compound(s) containing catalyst in which process a catalyst is used containing metal- and/or metal-based particles, optionally dispersed in a carbonaceous matrix, which catalyst has been obtained via an electric discharge.

EP 0 429 132 A1

## HYDROCONVERSION PROCESS

The present invention relates to a hydroconversion process wherein use is made of a catalyst containing metal- and/or metal-based particles.

Catalytic hydroconversion processes are of great importance in the petroleum industry in that they convert crude oils or feedstocks derived from crude oils into valuable products such as gasoline, naphtha, gas oils and optionally lubricating oils.

During the catalytic hydroconversion also upgrading of feedstocks is achieved, in particular when using catalysts capable of desulphurisation, denitrogenation and demetallisation of the feedstocks contemplated. Conveniently, catalytic hydroconversion processes are carried out in so-called fixed bed operation wherein the feedstock and hydrogen are passed through one or more beds of catalysts which may be the same or different followed by separation and/or upgrading treatments depending on the intended use of the products obtained.

The catalysts extensively applied in catalytic hydroconversion processes normally comprise one or more metals or metal compounds of Group VIB and/or Group VIII of the Periodic Table of the Elements supported by a carrier, normally a refractory oxide, such as silica, alumina or silica-alumina.

It is also known to use dispersed catalysts in admixture with hydrocarbonaceous oil in catalytic hydroconversion processes. Reference is made in this respect to EP-A-0 028 667 and the references cited therein. In essence, the catalysts described in said European patent specification are prepared by adding at least one thermally decomposable metal compound to the feedstock and heating the thermally decomposable metal compound within the feedstock in the presence of hydrogen or hydrogen and hydrogen sulphide to produce a solid catalyst within said feedstock, provided certain requirements with respect to the nature of the feedstock in relation to the metal constituent of the metal compound are met.

A disadvantage of the process described in said European patent specification is the necessity to use thermally decomposable metal compounds which are normally rather costly to produce and which then have to be decomposed again and converted into the catalytically more active metal sulphides. Moreover, it would not be possible to produce dispersed catalysts containing metals in elemental form in the process according to EP-A-0 028 667.

It has now been found that catalytic hydroconversion processes can be conveniently carried out when using a catalyst containing metal- and/or metal-based particles which have been obtained in a specific manner. In particular, catalytic hydroconversions can now be carried out with substantially increased Conradson Carbon Residue conversion into liquid products rather than coke.

The present invention thus relates to a process for converting hydrocarbonaceous materials at elevated temperature and pressure in the presence of hydrogen using a metal(s)- and/or metal-compound(s) containing catalyst in which process a catalyst is used containing metal- and/or metal-based particles, optionally dispersed in a carbonaceous matrix, which catalyst has been obtained via an electric discharge.

It has been found that catalysts produced via an electric discharge comprise very finely divided metal- and/or metal-based particles which substantially increase the catalytic selectivity which is very important in hydroconversion processes.

The catalysts to be used in the process according to the present invention are produced by means of an electrical discharge.

A suitable method of preparing catalysts to be used in the present process comprises allowing contact between a hydrogen containing gas and a plasma containing metal vapour(s). Without wishing to be bound to any particular theory it would appear that when an arc is struck between two electrodes whilst a hydrogen-containing gas is flowing through the gap between the electrodes very finely divided metal- and/or metal hydride particles are formed which have catalytic activity.

It is also possible to prepare catalysts to be used in the process according to the present invention by allowing an electric discharge between electrodes of which at least one is capable of delivering the required metal particles and which electrodes are placed in an environment capable of producing a carbonaceous matrix. Suitably, use can be made of a technique described in U.S. patent specification 4,416,751 directed at the production of so-called ferrofluids which are typically applied to separate ores and other materials of different densities.

When the catalysts to be used in the process according to the present invention are prepared by allowing contact between a hydrogen-containing gas and a plasma containing metal vapour(s) preference is given to the use of a consumable electrode comprising a Group IA, Group IIA or Group IIIA metal, or a suitable alloy thereof. The counterelectrode can be any suitable metal known to those skilled in the art such as tungsten, titanium or iron or alloys containing one or more of said metals with appropriate other metals.

Preferred metals which can be used to produce the catalysts to be used in the process according to the present invention by this method are sodium and aluminium.

Best results will be obtained when as hydrogen-containing gas hydrogen itself is used. If desired, inert gases as well as hydrocarbons which are preferably gaseous under standard conditions of temperature and pressure may be present. In the event that hydrocarbonaceous materials are also present during the formation of the catalysts as described hereinbefore it is most likely that carbon-containing metal compounds such as carbides and/or acetylides will be produced as well.

When the catalysts to be used in the process according to the present invention are produced by allowing an electrical discharge between electrodes of which at least one is capable of delivering the required metal particles and which electrodes are present in an environment capable of producing a carbonaceous matrix, preference is given to the use of liquid hydrocarbons, in particular one or more liquid alkanes as the feedstock to produce the carbonaceous matrix in which the metal and/or metal-containing particles are finely dispersed.

Good results have been obtained with pentane and/or dodecane as feedstock but other alkanes as well as mixtures of alkanes can also be suitably applied.

As consumable anodes in the process to produce metal(s)-and/or metal-compound(s) containing catalysts dispersed in a carbonaceous matrix can be suitably applied electrodes comprising Group IA, Group VIB or Group VIII metals and/or the appropriate alloys thereof. Examples of preferred metals comprise sodium, potassium, molybdenum, tungsten, iron, cobalt and nickel. Particularly preferred are molybdenum, iron and nickel, in particular nickel.

The catalysts containing the metal(s)- and/or metal-compound(s) in a carbonaceous matrix may contain up to 50% by weight of metal(s), calculated on dried catalyst. Preference is given to catalysts containing between 0.5 and 40% by weight of metal(s), calculated on dried catalyst.

It is also possible to use the feedstock to be catalytically converted as part or all of the environment used to produce the carbonaceous matrix in which the metal(s)- and/or metal-compound(s) are finely dispersed. Examples of feedstocks which can be suitably applied in producing the catalysts are (heavy) residual oils, deasphalted oils or distillates or mixtures of two or more of such feedstocks. It may be in particular advantageous to use a feedstock of residual nature to produce the catalysts to be used in the conversion of in particular residual feedstocks.

If desired, the catalysts containing metal(s)- and/or metal-compound(s) in a carbonaceous matrix can be prepared in the presence of an auxiliary gas, in particular a hydrogen-containing gas.

In the event that the catalysts to be used in the process according to the present invention have been produced by contacting a hydrogen gas with a plasma containing metal vapour(s) it may be necessary to separate and concentrate the metal-compounds produced by a suitable method.

In the event that the catalysts to be used in the process according to the present invention have been produced by allowing an electrical discharge between the electrodes in an environment capable of producing a carbonaceous matrix it may be useful to separate the matrix material produced from the remainder of the starting material by a suitable method such as decantation or filtration.

If desired, the catalysts produced may be subjected to a drying treatment to remove part or all of the starting material or liquid products produced thereby. It is also possible, of course, to use the catalysts as produced, in particular when the environment in which the catalysts were produced comprised at least part of the feedstock to be converted by the same catalyst.

Since the catalysts produced are finely divided it will be clear that rather small amounts of catalyst will normally be sufficient to carry out the conversion process according to the present invention. Normally, catalysts will be applied in an amount of up to 5% by weight, calculated on feedstock to be converted, but higher amounts may be used as well. Preference is given to the use of catalysts in an amount between 100 and 5000 part per million by weight on feedstock.

In order to obtain a good performance of the catalyst to be used in the conversion process it may be advantageous to subject the catalyst to a mixing treatment prior to its use in the conversion process proper. Mixing can be conveniently achieved by introducing the catalyst as produced, i.e. together with part or all of the initial feedstock left over, to a mixing device such as a mixer/settler or preferably a soaking vessel, to which device the feedstock to be converted is also introduced. By allowing some residence time in the mixing device a proper mixing can be achieved.

It is also possible, and in fact preferred to use a soaker vessel equipped with means to withdraw hydrogen and/or alkanes left over from the catalyst preparation process. Preference is given to soaker vessels containing perforated plates, e.g. soaker vessels as described in European patent specification 7,656.

The feedstock to be converted and the catalyst to be used in the conversion can be fed concurrently as

3

well as countercurrently to the mixing device. Preferably, the introduction is carried out countercurrently in order to achieve the best mixing possible. Good results will be obtained when the catalyst mixture, containing relatively volatile components is fed into the mixing device at a lower point than the feedstock to be converted. Suitably, the catalyst stream (in particular when containing unconverted alkanes and hydrogen) is fed into the bottom of the mixing device and the feedstock to be converted is fed into the top of the mixing device so as to ensure the best possible contact.

The mixing operation as envisaged in the mixing device can be carried out at ambient or at elevated temperature. In the event that the mixing is to be carried out at elevated temperature in order to achieve a better mixing, care is taken not to use a temperature at which the conversion process already substantially proceeds.

The catalytic conversion process according to the present invention is suitably carried out at a pressure between 20 and 250 bar and at a temperature between 200 and 550 °C. Preferably the process according to the present invention is carried out at a pressure in the range between 30 and 150 bar and at a temperature in the range between 250 and 475 °C.

The effluent obtained after carrying out the process according to the present invention can be suitably subjected to a further upgrading process. It can also be subjected to one or more distillation treatments in order to collect the various products formed. If desired, part or all of the residual material left over after a distillation treatment, in particular after a treatment under reduced pressure, can be recycled to the conversion reactor, to the mixing device or to both.

The invention will now be illustrated by means of the following Examples.


### EXAMPLE I

The catalyst to be used in the conversion of a hydrocarbonaceous feedstock was prepared by sparking between two nickel electrodes immersed within pentane. The electrodes were kept at a distance of about 1 mm and the voltage used was about 8 kV. The catalyst obtained contained about 20% by weight of nickel and 80% by weight of carbonaceous material having a C/H atomic ratio of about 1.

Prior to its use the catalyst produced was decanted, supernatant pentane discarded and both the catalyst and remaining pentane were mixed with the feedstock to be processed. The feedstock/catalyst mixture obtained was stripped under nitrogen to remove excess pentane.

The feedstock to be converted was a Middle East residue left over after atmospheric distillation. It contained 47.4% by weight of material boiling above 510 °C, 3.07 % by weight on feed of sulphur and had a Conradson Carbon Residue (CCR) of 8.2 % by weight on feed.

The hydroconversion process was carried out at a temperature of 445 °C and at a total pressure of 75 bar in a 20 cm$^3$ stainless steel reactor filled with stainless steel balls (diameter 3 mm) resulting in a 10 cm$^3$ useful volume. The feedstock was passed in upflow through the reactor allowing for a residence time of one hour and gas rate of 200 Nl of hydrogen per kg of feedstock, including catalyst. The amount of nickel present in the feedstock amounted to about 200 part per million by weight. It was very finely dispersed.

A comparative experiment was carried out under essentially the same conditions (reactor temperature being 444 °C) but without the presence of a catalyst. The results of both experiments are given in Table 1.

## TABLE 1

|                                          | No catalyst | Ni-catalyst |
| ---------------------------------------- | ----------- | ----------- |
| Temperature, $^{\circ}$C                 | 444         | 445         |
| Pressure, bar                            | 75          | 75          |
| Residence time (hours)                   | 1           | 1           |
| Gas rate Nl/kg feed                      | 200         | 200         |
| 510+ $^{\circ}$C Conversion %            | 45          | 45          |
| 370+ $^{\circ}$C Conversion %            | 36.3        | 30.7        |
| Selectivity of 370+ $^{\circ}$C converted into: % | | |
| C4$^-$                                   | 9.9         | 10.1        |
| C5/250 $^{\circ}$C                       | 56.7        | 55.0        |
| 250/370 $^{\circ}$C                      | 29.1        | 34.0        |
| Coke                                     | 4.3         | 0.9         |
| Hydrogen consumption %                   | -0.2        | 0.11        |
| Coke production %                        | 1.45        | 0.11        |
| CCR Conversion %                         | -11.0       | 13.6        |

It will be clear from the results given in Table 1 that the process according to the present invention is of particular interest in that it is capable of increased CCR conversion whereas under comparative, i.e. no-catalyst conditions actually Conradson Carbon Residue is formed (as indicated by the negative sign). It should also be noted that the amount of coke produced (calculated on 370+ $^{\circ}$C selectivity) is about five times as high without the presence of a catalyst.

EXAMPLE II

The experiments described in Example I were repeated but using a mixed feedstock containing 4 parts of a residue obtained after distillation under reduced pressure of a South American crude oil and 1 part of a catalytically cracked cycle oil. The relevant process parameters and the results obtained are summarised in Table 2.

### TABLE 2

| | No catalyst | Ni-catalyst |
|---|---|---|
| Temperature, $^{\circ}$C | 440 | 444 |
| Pressure, bar | 75 | 75 |
| Residence time (hours) | 1 | 1 |
| Gas rate Nl/kg feed | 500 | 500 |
| 510+ $^{\circ}$C Conversion % | 45 | 45 |
| Selectivity to % | | |
| C4$^-$ | 8.2 | 10.7 |
| C5/250 $^{\circ}$C | 36.5 | 31.3 |
| 250/370 $^{\circ}$C | 24.0 | 26.4 |
| 370/510 $^{\circ}$C | 25.0 | 28.8 |
| Coke | 6.3 | 2.6 |
| Hydrogen consumption % | 0.10 | 0.21 |
| Coke production % | 2.65 | 0.88 |
| CCR Conversion % | -5.0 | 5.1 |
| C7 Asphaltenes conversion % | 0 | 26.9 |

It will be clear from the results presented in Table 2 that again the coke production is minimised when using the catalyst in accordance with the present invention. Moreover, a large amount of the C7 asphaltenes present in the heavy feedstock is converted into liquid material rather than to coke in the absence of a catalyst.

### EXAMPLE III

A mixture of argon and hydrogen was fed at 65 l/h through the gap between a thoriated tungsten electrode serving as cathode and a thoriated tungsten electrode submersed in liquid sodium kept in a vessel surrounding the anode. The electrodes were operated at 60 V and a current intensity of 25 A. This caused the formation of a continuous arc.

The argon/hydrogen mixture also served as the carrier for the finely dispersed sodium-based particles obtained. The particles containing flow was fed into the bottom part of a vessel containing part of the feedstock to be converted later in order to introduce the particles into said feedstock. Because of the upflow applied a good mixing of particles and feedstock was achieved at atmospheric pressure.

The feedstock applied was an atmospheric residue of Middle East origin. The catalytic conversion process was carried out at 380 $^{\circ}$C and 80 bar total pressure at a hydrogen gas rate of 1037 Nl gas/kg feedstock using a residence time of 1 hour. The amount of sodium on feed was 700 parts per million.

It was found that the asphaltenes content of the feedstock was reduced from 10.3 % by weight on feed to 7.7 % by weight on feed.

The experiment was repeated at 444 $^{\circ}$C using the same feedstock. The asphaltenes content was reduced to 7.3% by weight on feed and under this rather severe temperature regime for a sodium-based catalyst a coke make of only 2% by weight was observed compared to 3.2% by weight when operating without a catalyst.

**Claims**

1. Process for converting hydrocarbonaceous materials at elevated temperature and pressure in the presence of hydrogen using a metal(s)- and/or metal-compound(s) containing catalyst, characterised in that a catalyst is used containing metal- and/or metal-based particles, optionally dispersed in a carbonaceous matrix, which catalyst has been obtained via an electric discharge.

2. Process according to claim 1, characterised in that a catalyst is used which has been produced by allowing contact between a hydrogen-containing gas and a plasma containing metal vapour(s).

3. Process according to claim 2, characterised in that a plasma is used containing metal vapour(s) of one or more metals of Group IA, IIA or IIIA of the Periodic Table of the Elements, in particular sodium or aluminium.

4. Process according to claim 1, characterised in that a catalyst is used which has been produced by allowing an electric discharge between electrodes of which at least one is capable of delivering the required metal particles, which electrodes are placed in an environment capable of producing a carbonaceous matrix.

5. Process according to claim 4, characterised in that a liquid alkane or a mixture of liquid alkanes is used to produce the carbonaceous matrix, in particular pentane and/or dodecane.

6. Process according to claim 4 or 5, characterised in that a consumable anode is applied based on a metal of Group IA, Group VIB or Group VIII of the Periodic Table of the Elements or alloys of two or more of such metals.

7. Process according to claim 6, characterised in that an anode is applied based on sodium, potassium, molybdenum, tungsten, iron, cobalt or nickel, in particular molybdenum, iron or nickel and preferably nickel.

8. Process according to one or more of claims 4-7, characterised in that the catalyst applied contains up to 50% by weight of metal(s), in particular between 0.5 and 40% by weight of metal(s).

9. Process according to one or more of the preceding claims, characterised in that a catalyst is used which has been prepared in the presence of feedstock to be converted.

10. Process according to claim 9, characterised in that hydrocarbons of residual nature are applied when preparing the catalyst.

11. Process according to one or more of claims 1-3, characterised in that the catalyst is subjected to a separation and/or concentration treatment prior to its use.

12. Process according to claim 1, characterised in that the catalyst applied has been prepared in the presence of an auxiliary gas, preferably a hydrogen containing gas.

13. Process according to one or more of claims 1-12, characterised in that a heavy residual oil, a deasphalted oil or a distillate or a mixture of two or more thereof is (are) used as feedstock.

14. Process according to claim 13, characterised in that a catalyst is used in an amount of up to 5% by weight on feedstock, preferably in an amount between 100 and 5000 part per million by weight on feedstock.

15. Process according to one or more of claims 1-14, characterised in that feedstock and catalyst are fed countercurrently to a mixing vessel prior to the main catalytic conversion process.

16. Process according to one or more of claims 1-14, characterised in that feedstock and catalyst are fed concurrently to a mixing vessel prior to the main catalytic conversion process.

17. Process according to claim 15 or 16, characterised in that as mixing vessel a soaker vessel is applied, in particular a soaker containing a number of mixing stages, preferably in the form of perforated plates.

18. Process according to one or more of claims 1-17, characterised in that the hydroconversion process is carried out at a pressure between 20 and 250 bar and at a temperature between 200 and 550 °C, preferably at a pressure between 35 and 150 bar and at a temperature between 250 and 475 °C.

19. Hydroconverted materials whenever obtained by a process as claimed in one or more of claims 1-18.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-0 028 667 (EXXON) <br> * Claims * <br> – – – | 1 | C 10 G 49/02 <br> B 01 J 37/34 |
| A | WO-A-8 502 557 (BATTELLE-INSTITUT) <br> * Claims 1,12-14 * <br> – – – | 1 | |
| A | EP-A-0 193 701 (NIPPONDENSO) <br> * Abstract * <br> – – – – – | 1 | |

| | |
|---|---|
| | TECHNICAL FIELDS SEARCHED (Int. Cl.5) |
| | B 01 J <br> C 10 G |

The present search report has been drawn up for all claims

| Place of search | Date of completion of search | Examiner |
|---|---|---|
| The Hague | 21 December 90 | MICHIELS P. |